# EUROPEAN PATENT APPLICATION

(11) **EP 4 767 827 A1**
(43) Date of publication of application: **01.07.2026**
(21) Application number: 24223258.5
(22) Date of filing: 24.12.2024
(51) Int. Cl.: A23C 9/13, A23C 20/02, A23D 7/00, A23J 3/14, A23L 33/185, A23L 29/00

(54) **COMPOSITIONS FOR ACIDIFIED DAIRY ANALOGUE PRODUCTS**

(71) Applicant: BK Giulini GmbH, 68526 Ladenburg (DE); Plantible Foods, Inc., San Marcos, California 92069 (US)
(72) Inventor: HERZ, Eva, 69115 HEIDELBERG (DE); SEO, Sooyoun, EDGEWATER, NJ 07020 (US); SRICHUWONG, Sathaporn, 69115 HEIDELBERG (DE); SPORKA, Radovan, 69117 HEIDELBERG (DE); BROMLEY, Keith, TORRANCE, CA 90504 (US)
(74) Representative: Hoyng Rokh Monegier B.V.

(57) **Abstract**

The present invention relates to microgel compositions comprising about 1.0 wt% to about 15 wt% RuBisCO protein and water or a plant-based milk. Further, microgel emulsion compositions are described. The microgel compositions and microgel emulsion compositions according to the present invention can be used in the preparation of dairy analogues, in particular acidified dairy analogues such as yogurt. The present invention further relates to the method of preparation of such compositions.

## Description

### Field of the invention

This invention relates to an edible microgel composition comprising RuBisCO protein and methods for preparation thereof. The present invention further relates to microgel emulsions and acidified microgel emulsions comprising said edible microgel. The present invention further relates to acidified dairy analogue products comprising the microgel compositions described herein.

### Background of the invention

Increasing awareness on the impact of animal-based food production on health, sustainability, and animal welfare has increased the consumers' interest in a plant-based focused diet. Growing demand for respective food products has led to development of plant-based alternatives across various categories including meat, seafood, and dairy analogue products. In addition, health issues such as milk protein allergies or lactose intolerances have led to an increasing demand for dairy analogues. Dairy analogues should mimic the characteristics of their dairy counterparts, that means, having a creamy white color, clean dairy flavor with slightly sour taste, silky smooth or having a thick and creamy texture.

Production of non-dairy yogurt predominantly focuses on using plant sources such as soy, almond, pea, coconut, oats, and cashews as bases. One of the challenges in producing non-dairy yogurt and other acidified plant-based products is the undesirable texture, specifically grittiness and graininess, that can form due to the tendency of plant proteins to aggregate and precipitate at lower pH. This challenge in texture also limits the overall quantity of protein that can be incorporated into such products. To solve this, yogurt analogues currently on the market include thickeners and stabilizers such as pectin, modified starch, carrageenan, or locust bean gum to mimic the characteristics of dairy products. However, most thickeners and stabilizers are chemically modified food additives which are number coded according to the International Numbering System for Food Additives (INS), which contradicts the consumers' desire for cleaner label food without chemically sounding or highly processed substances. WO2022/248601 describes a leguminous protein composition having improved acid-gelling properties by blending with a cooked leguminous fiber.

Other attempts to solve this issue involve using complicated processing conditions that are difficult to implement in large scale production. EP2695522A1 describes a method to produce soy yogurts that are without grainy structure. WO2019/069111 describes the methods for making non-dairy fermented food products using pea protein and sugar with substantially no added stabilizers.

Current solutions to improve the texture of acidified dairy analogues, such as yogurt, are limited to adding stabilizers and thickeners or making significant process modifications, contradicting consumers' demand for cleaner labels and less processing. Obtaining smooth and creamy textures for acidified dairy analogue products with a simple manufacturing step without stabilizing agents remains a major technical difficulty.

### Summary of the invention

The present invention aims to provide a composition and a method for making said composition, which improves the texture of acidified dairy analogues, such as yogurt, without the use of stabilizers. Microgels produced through the irreversible heat gelation of RuBisCO protein and emulsions comprising those can be used to impart a desirable texture and a shorter ingredient list to dairy analogues bridging the gap in current alternative dairy analogues.

In one aspect, the invention relates to a microgel composition comprising about 1.0 wt% to about 15 wt% RuBisCO protein, and water or a plant-based milk. Preferably the microgel composition comprises about 1.0 wt% to about 13 wt% RuBisCO protein, more preferably about 1.0 wt% to about 10 wt%, even more preferably 1.0 wt% to about 8 wt%, even more preferably about 1.0 wt% to about 5.0 wt%.

In one embodiment, the microgel composition has a particle size distribution of less than D[4,3] 90 µm.

In another embodiment, the microgel composition comprises at least one protein other than RuBisCO, wherein the at least one protein is selected from the group consisting of plant protein, microbial protein, and recombinant protein.

In one embodiment, the microgel composition comprises a plant-based milk, wherein the plant-based milk is a liquid product derived from the processing of one or more plant materials preferably selected from soy, pea, almond, oat, rice, and coconut.

In accordance with a second aspect of the invention there is provided a microgel emulsion composition comprising about 40 wt% to about 99.9 wt% of the microgel composition and about 0.1 wt% to about 60 wt% of at least one lipid.

In one embodiment, the microgel emulsion composition comprises at least one acid, preferably wherein the at least one acid is selected from the group consisting of malic acid, citric acid, acetic acid, glucono-delta-lactone, phosphoric acid, lactic acid, tartaric acid, fumaric acid, sorbic acid, and benzoic acid.

In another embodiment, the microgel emulsion composition comprises at least one of a lactic acid bacterial culture, wherein the lactic acid bacterial culture is selected from the group consisting of *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.*

In accordance with a third aspect of the invention, there is provided a dairy analogue product comprising the microgel composition or the microgel emulsion composition described herein.

In one embodiment, the dairy analogue product is a yogurt-type product, a sour cream-type product or cream cheese, preferably wherein the yogurt-type product is set yogurt, stirred yogurt, drinking yogurt, Kefir yogurt, probiotic yogurt, lactose-free yogurt, high-protein yogurt, low-fat yogurt, and non-fat yogurt.

In another embodiment, the dairy analogue product has a storage modulus at a temperature of 20°C within the range of about 100 Pa to about 20 000 Pa. Preferably, the flow transition index is greater than 4 measured with an Anton Paar MCR 302 rheometer.

In another embodiment, the dairy analogue product has a pH between about 4.0 and about 6.0, preferably between about 4.5 and about 5.5.

In another embodiment, the dairy analogue product further comprises at least one of a carbohydrate, a sugar, an emulsifier, or a salt.

In a fourth aspect of the invention, it is provided a method for making a microgel composition comprising the steps of:
(a) dispersing a suitable amount of RuBisCO in water or in a plant-based milk preferably from about 1.0 wt% to about 15 wt% RuBisCO protein, preferably from about 1.0 wt% to about 13 wt%, more preferably from about 1.0 wt% to about 10 wt%, even more preferably 1.0 wt% to about 8 wt%, even more preferably from about 1.0 wt% to about 5.0 wt%;
(b) heating to a temperature of about 65°C or more, preferably to a temperature of about 65°C to about 180°C, more preferably to a temperature of about 75°C to about 120°C;
(c) cooling to a temperature of about 35°C or less, preferably to a temperature of about 0°C to about 35°C, more preferably to a temperature of about 2°C to about 15°C;
(d) high shear mixing or high-pressure homogenizing the composition to obtain a microgel.

In one embodiment, step (a) of the method further comprises dispersing at least one protein other than RuBisCO, wherein the at least one protein is selected from the group consisting of plant protein, microbial protein, and recombinant protein.

In one embodiment, step (d) of the method further comprises dispersing at least one protein other than RuBisCO, wherein the at least one protein is selected from the group consisting of plant protein, microbial protein, and recombinant protein.

The process may be carried out in a continuous manner, that means, wherein the formation of the microgel occurs within a continuous mixing process wherein steps (a), (b) and (d) are carried out concurrently.

In another embodiment, the microgel is further processed through a drying step to obtain a dry powder or particulate.

In another embodiment, the microgel is mixed with about 0.1 wt% to about 60 wt% of at least one lipid and emulsified to obtain a microgel emulsion composition. In an alternative embodiment, the microgel is mixed with about 0.1 wt% to about 60 wt% of at least one lipid and at least one protein other than RuBisCO, wherein the at least one protein is selected from the group consisting of plant protein, microbial protein, and recombinant protein, and emulsified to obtain a microgel emulsion composition.

In another embodiment, the microgel emulsion composition is acidified with at least one acid preferably selected from the group consisting of malic acid, citric acid, acetic acid, glucono-delta-lactone, phosphoric acid, lactic acid, tartaric acid, fumaric acid, sorbic acid, and benzoic acid.

In another embodiment, the microgel emulsion composition is fermented with a lactic acid bacterial culture, preferably wherein the lactic acid bacterial culture is selected from the group consisting of *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.*

### Detailed description of the figures

FIG 1 represents a light microscopic image of a RuBisCO microgel. Scale bar is 50 µm.
FIG 2 represents light microscopy images of emulsions stabilized by 4 wt% protein: (A) RuBisCO protein, (B) RuBisCO microgel, (C) soy protein isolate, (D) pea protein isolate. Scale bars are 50 µm. All protein solutions were prepared based on their final protein content.
**FIG 3** shows the effect of pH on the rheological parameters of RuBisCO microgel emulsion: (A) storage modulus, G', at the limit of the linear viscoelastic region and (B) flow transition index.
**FIG 4** shows the effect of protein concentration (wt%) on the rheological parameters of RuBisCO microgel emulsion at acidified pH: (A) storage modulus, G', at the limit of the linear viscoelastic region and (B) flow transition index.
**FIG 5** shows the comparative rheological parameters of RuBisCO microgel yogurt analogue against other non-dairy yogurt analogues and commercial dairy and vegan yogurt products at 4 wt% protein: (A) storage modulus, G', at the limit of the linear viscoelastic region and (B) flow transition index.
**FIG 6** shows a comparative picture of RuBisCO microgel yogurt analogue, other non-dairy analogues, and commercial yogurt products.

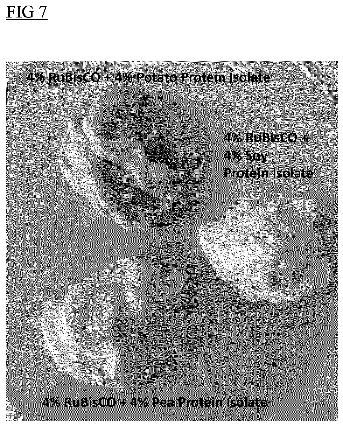

**FIG 7** shows a comparative picture of non-dairy yogurt containing RuBisCO microgel and other plant proteins.

### Detailed description of the invention

### Definitions

For the purpose of interpreting this specification, the following definitions will apply and whenever appropriate, terms used in the singular will also include the plural and vice versa. In the event that any definition set forth below conflicts with the usage of that word in any other document, including any document incorporated herein by reference, the definition set forth below shall always control for purposes of interpreting this specification and its associated claims unless a contrary meaning is clearly intended (for example in the document where the term is originally used). The use of the word "a" or "an" when used in conjunction with the term "comprising" in the claims and/or the specification may mean "one," but it is also consistent with the meaning of "one or more," "at least one" and "one or more than one." The use of the term "or" in the claims is used to mean "and/or" unless explicitly indicated to refer to alternatives only or the alternatives are mutually exclusive, although the disclosure supports a definition that refers to only alternatives and "and/or." As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. Furthermore, where the description of one or more embodiments uses the term "comprising," those skilled in the art would understand that, in some specific instances, the embodiment or embodiments can be alternatively described using the language "consisting essentially of' and/or "consisting of." As used herein, the term "about" means at most plus or minus 10% of the numerical value of the number with which it is being used.

It is contemplated that any method or composition described herein can be implemented with respect to any other method or composition described herein.

One skilled in the art may refer to general reference texts for detailed descriptions of known techniques discussed herein or equivalent techniques.

The term "acidification" as used herein refers to a process or condition wherein a product, substance, or medium has been treated or modified to reduce its pH, making it more acidic. This can be achieved through the addition of acidic substances such as citric acid, lactic acid, acetic acid, or by natural fermentation processes where bacteria produce acid as a byproduct. Acidification is often employed in food preservation, flavor development, and in achieving specific textures in various food products, such as in the making of acidified dairy products like sour cream, cheese and yogurt.

The term "acidified dairy analogue" as used herein refers to products that are designed to replicate or simulate the taste, texture, function, or other properties of acidified dairy products, but without the use of dairy ingredients. Examples might include sour cream made from plant-based milk, fermented plant-based yogurt, or plant-based kefir.

The term "amplitude sweep test" as used herein refers to a rheological test to study the properties of materials like gels, creams, and other semi-solid substances. Examples of measures obtained from an "amplitude sweep test" include: 1) storage modulus G', which reflects the material's elastic or solid-like properties, 2) loss modulus G", which reflects the material's viscous or liquid-like properties, 3) linear viscoelastic region (LVER), the range of stress/strain within which the material's properties remain constant, 4) loss factor tanδ, calculated as G"/G', that is tanδ = 0 for ideal-elastic material, tanδ > 100 for ideally viscous material and tanδ = 1 at the gel point, 5) flow transition index, calculated as τ_{f}/τ_{y} (τ_{f}: τ at flow point, τ_{y}: τ at end of LVER), a point at which a material transitions from behaving more like a solid to behaving more like a liquid.

The term "dairy analogue" as used herein refers to a product or substance that is designed to replicate a traditional dairy product but is derived from non-animal sources. Such products emulate the taste, texture, and nutritional value of dairy products, such as milk, cheese, yogurt, and cream, but are sourced from ingredients like nuts, grains, legumes, and microorganisms. Microbial protein sources involve the use of fungi, yeast, algae, or bacteria in a fermentation process to produce proteins that can mimic dairy proteins. These ingredients can be heterologous protein, homologous protein, or single cell proteins. These products may use a variety of ingredients, proteins, oils, stabilizers, and other components to achieve the desired texture such as viscosity, mouthfeel, creaminess, and flavour.

The term "emulsion" as used herein refers to a mixture of two or more immiscible liquids, typically oil and water, wherein one liquid is dispersed in the other in the form of small droplets. Emulsions are stabilized by the presence of an emulsifying agent or surfactant, which reduces the interfacial tension between the immiscible liquids, preventing them from separating. Emulsions can be found in various products and applications, including food. Depending on the dispersed phase, emulsions can be categorized as oil-in-water (O/W) where oil droplets are dispersed in water, or water-in-oil (W/O) where water droplets are dispersed in oil.

The term "gelling" as used herein refers to the process of transformation of a liquid into a gel, a semi-solid state characterized by a network of interconnected molecules.

The term "microgel" as used herein refers to a tiny, soft particle, typically in the micron size range, made of polymer networks that can swell in the presence of a solvent, especially water. These particles can undergo significant volume changes in response to external stimuli such as pH, temperature, or the presence of specific ions or molecules.

The term "non-dairy yogurt" as used herein refers to a product or substance that is designed to replicate or simulate one or more of the taste, texture, function, or other properties of a dairy yogurt, but is made without the use of dairy ingredients resulting from the processing of white fluid secreted from the mammary glands of female mammals. Non-dairy yogurts may use a variety of plant-based ingredients, oils, stabilizers, and other components to achieve the desired consistency and flavour.

The term "particle size distribution" as used herein refers to the proportionate quantities of particles sorted according to size. It describes the range of particles sizes and their relative frequencies, which is important for understanding the properties and behaviour of materials, particularly in emulsion.

The term "Pickering emulsion" as used herein refers to a type of emulsion stabilized by solid particles instead of traditional surfactants. These solid particles adsorb at the interface between the two immiscible liquid phases, forming a protective barrier that prevents the droplets from coalescing.

The term "plant-based milk" as used herein refers to a liquid product derived from the processing of plant materials designed to mimic the properties and uses of animal-derived milk. Plant-based milk is typically created by soaking, grinding, and extracting liquid from various plant sources such as nuts, grains, seeds, or legumes. Common examples include almond milk, soy milk, oat milk, rice milk, and coconut milk.

The term "plant protein" as used herein refers to a type of protein derived from plant sources. This includes proteins from legumes, grains, nuts, seeds, and vegetables. Common examples include soy protein, pea protein, potato protein, and wheat protein.

The term "stabilizers" as used herein refers to ingredients other than protein, sugar, and non-dairy milk that contribute to viscosity and preserve the structure characteristics of a food product over time. Such stabilizers can be chemically modified food additives which are number coded according to the International Numbering System for Food Additives (INS) or E-number according to European Union. Examples include modified starches, pectins, gums, alginate, and other hydrocolloids. It is to be understood that "added stabilizers" does not include pectins, proteins, starches, or sugars incidentally included from fruit or non-dairy milk.

The term "vegan protein" as used herein refers to a protein derived from plants or a microbial protein material or a mixture thereof. The protein material does not contain any protein of animal origin.

The term "vegan lipid" as used herein refers to a lipid derived from plants or microorganisms. The vegan lipid does not contain any animal-derived components.

The term "viscosity" as used herein refers to a fluid's resistance to flow and indicates how easily a product pours or spreads.

### Microgel composition

In order to achieve a texture normally associated with acidified dairy products such as yogurts, commercial dairy analogues include stabilizers, such as modified starches, carrageenan, pectins, gums and/or other hydrocolloids to overcome the gritty and grainy texture caused by acidified non-dairy proteins. However, consumers increasingly demand shorter ingredient lists which presents a challenge for producing dairy analogues without added stabilizers using industrially simple processes.

The present invention solves this problem by providing microgel compositions and methods for their preparation thereof, which surprisingly deliver exceptional texture in dairy analogues, in particular in acidified dairy analogues, without the need for added stabilizers. The microgel composition according to the present also allow for the incorporation of higher protein content without having a negative impact on the texture of acidified dairy analogues. The resulting dairy analogues are smooth and creamy in texture and mouthfeel, delivering characteristics consistent with consumer expectations for dairy products such as yogurt.

Hydrogels can be defined as large networks of hydrated polymer molecules which entrap a significant quantity of solvent, either water or electrolyte. In contrast, gelled particles consist of discrete polymer networks of finite dimensions, swollen by the solvent in which they are dispersed. Similarly to bulk hydrogels, physical and chemical cross-linking can be exploited to control the polymer network swelling depending on the starting materials available and the targeted application. Depending on the size of the gelled particles, they may be classified as macro-, micro-, or nanogels. Typically, the gelled particles with a particle size between 100 nm and 100 µm are considered microgels.

Most microgels with potential applications in foods consist of supramolecular assemblies of biopolymer molecules, more specifically proteins and polysaccharides. Such biopolymers form gels via intermolecular association under different conditions with heat set, cool set and ionotropic gelation mechanisms being the most common.

In one aspect, the invention relates to a microgel composition comprising about 1.0 wt% to about 15 wt% RuBisCO protein, and water or a plant-based milk. In a preferred embodiment, the microgel composition comprises less than 15 wt% RuBisCo protein, preferably less than 13 wt% RuBisCo protein, more preferably less than 10 wt% RubisCo protein, even more preferably less than 8 wt% RuBisCo protein, even more preferably less than 5 wt% RuBisCo protein. In a preferred embodiment, the microgel composition comprises about 1.0 wt% to about 13 wt% RuBisCO protein, more preferably about 1.0 wt% to about 10 wt% RuBisCO protein, even more preferably about 1.0 wt% to about 8 wt% RuBisCO protein, even more preferably about 1.0 wt% to about 5 wt% RuBisCO protein.

RuBisCO, ribulose-1,5-bisphosphate carboxylase-oxygenase, is one of the most prevalent plant proteins on the earth. It is a water-soluble protein that can be extracted from a variety of plants and algae. Exemplary methods for its extraction and purification are disclosed in the prior art, for example in WO2021/007484 and WO2021/015087.

Preferably, the RuBisCO protein is obtained from Lemna or Lemnoideae, often referred to as duckweed or water lentils. Nonetheless, RuBisCO protein may also be extracted from plants such as spinach, grass, sugar beet, alfalfa, or tobacco leaves. Unique to RuBisCO is its ability to undergo heat-induced gelation at minimal concentrations, distinguishing it from many plant proteins. RuBisCO protein stands out as a sustainable source of essential amino acids, comparable to egg white and soy proteins and surpassing proteins from sources like peas and wheat. In addition, its high solubility offers advantages in blending, processing, interaction with other ingredients, and product uniformity.

The RuBisCO protein may also be heterologously expressed in a microorganism such as bacteria, yeast, fungi, or algae, isolated and purified.

RuBisCO protein may be supplied as a dry, water-soluble powder product. For the purpose of this invention, the wt% protein content refers to the RuBisCo protein content in the final product. Preferably the RuBisCo protein powder used in the present invention has a protein purity of about 50% or higher, preferably about 70% or higher, more preferably about 80% or higher. In another embodiment, the RuBisCo protein powder may comprise other components. In particular, the RuBisCo protein powder may comprise other proteins.

RuBisCO microgels may be formed following heat-induced gelation and subsequent mechanical shearing of the gelled protein network until a target population with a particle size distribution as further defined herein is produced.

In one embodiment, the microgel according to the invention has a particle size distribution consisting of a volume weighted mean diameter D[4,3] of less than 90 µm, preferably between D[4,3] of 10 µm and 50 µm. Preferably, the microgel according to the invention has a particle size distribution of a d₉₀ less than 100 µm. The particle size distribution was determined by light scattering using a Malvern Mastersizer 3000 fitted with Hydro-Cell. The smaller particle size distribution allows for a smooth appearance and smooth dispersing texture in the mouth.

The microgel composition according to the invention, comprising about 1.0 wt% to about 15 wt% RuBisCO protein has viscoelastic gel properties. Viscoelastic compositions exhibit both elastic (recoverable) and viscous (non-recoverable) behavior when deformed, meaning they have both elastic and viscous components. Viscoelasticity of a composition can be assessed by measuring the storage modulus (G'), characterizing the elastic part and the loss modulus (G"), characterizing the viscous part, in an oscillatory rheology measurement. To consider a composition a viscoelastic gel, the storage modulus G' has to be higher than the loss modulus G" or tan δ = G"/G' = < 1.

The inventors surprisingly found that RuBisCO microgels can achieve desired textural and viscoelastic gel properties with a substantially lower concentration of protein. The formation of a microgel at similar low concentration could not be observed for any other plant-derived proteins. Preferably, the microgels according to the invention have a storage modulus in the range of about 100 Pa to about 20 000 Pa, more preferably in the range of about 100 Pa to about 10 000 Pa. Preferably, the microgels according to the invention have a tan δ < 100, preferably δ < 50, more preferably δ < 10, even more preferably δ < 1. For example, at a 4 wt% protein concentration, RuBisCO microgels may have a storage modulus G' of about 550 Pa, and tan δ of about 0.23. Under such values, RuBisCO microgels therefore clearly show gel properties. On the other hand, compositions comprising soy protein isolate show a G' < 10⁻⁵ Pa, , and tan δ > 100, and compositions comprising pea protein isolate show a G' < 10⁻⁵ Pa, and tan δ > 100. Such soy protein and pea protein compositions therefore show only viscous liquid properties.

The viscoelastic gel properties of RuBisCO microgels are advantageous for applications wherein the partial or complete replacement of stabilizing additives is desired. Further, the RuBisCO microgel remains adaptable and maintains structural and textural integrity throughout additional processing such as acidification which allows for an easier integration into various liquid/beverage products.

The microgel composition may comprise additional proteins other than RuBisCO. The additional proteins may be selected from the group consisting of plant proteins, microbial proteins, and recombinant proteins. A suitable protein can be selected from the group of protein isolates or concentrates. Examples of plant proteins suitable for use in the microgel compositions are protein materials from pulses, such as chickpea, faba bean, lentils, lupine, mung bean, pea or soy, protein materials from oil seed, such as hemp, rapeseed/canola or sunflower, protein materials from cereals, such as rice, corn, wheat or triticale, further potato protein, protein materials from nuts, such as almond, cashew, peanut, protein materials from plant leaves such as alfalfa leaves, spinach leaves, sugar beet leaves or water lentil leaves. Microbial proteins may also be suitable as an additional protein component of the microgel compositions. Examples of microbial proteins include proteins from fungi, proteins from mycelium, proteins from archaea, proteins from bacteria, proteins from yeast, and proteins from microalgae. Algae proteins are also suitable for use in compositions according to the present invention. Further, heterologous expressed proteins or recombinant proteins may also be suitable for use in such compositions. Mixtures of the proteins mentioned hereby may also be used.

### Microgel emulsion composition

In microgel emulsion applications, the microgel emulsion composition comprises between about 40 wt% and about 99.9 wt% the microgel composition, preferably between about 50 wt% and about 99 wt%, more preferably between about 70 wt% and about 98 wt%, even more preferably more than 80 wt%. Total RuBisCO protein concentration in the microgel emulsion composition typically ranges from about 1.0 wt% to about 15 wt%, preferably from about 1.5 wt% to about 12 wt%, more preferably from about 2 wt% to about 10 wt%, relative to the microgel emulsion.

In microgel emulsion compositions according to the present invention, lipids are used in concentrations ranging from about 0.1 wt% to about 60 wt% relative to the microgel emulsion, preferably from about 1.0 wt% to about 50 wt%, more preferably from about 2.0 wt% to about 30 wt%, even more preferably less than about 20 wt%.

The lipids used in the microgel emulsion compositions are vegan lipids. Vegan lipids refer to consumable fats or oils of non-animal origin. These lipids include, but are not limited to, triglycerides, phospholipids, glycolipids, and sterols, obtained from sources such as plants (vegetables, fruits, nuts, seeds) and microorganisms (algae, yeast, bacteria, fungi). Commonly used plant oils include corn, palm, rapeseed, canola, sunflower, soybean or coconut oil, and mixtures thereof. In a preferred embodiment, the oil comprises canola oil, rapeseed oil, sunflower oil, palm oil, or coconut oil.

It was surprisingly found that the microgel emulsion composition according to the invention provides higher emulsion stability and textural quality such as creaminess and viscosity at a wide range of protein concentration, in particular from about 1 wt% to about 15 wt% of protein, compared to other plant protein microgel emulsion compositions. Preferably, the protein content in the microgels according to the present invention is from about 1 wt% to about 15 wt%, more preferably about 1.0 wt% to about 10 wt%, even more preferably about 1.0 wt% to about 8 wt%, even more preferably about 1.0 wt% to about 5 wt% relative to the microgel emulsion. One major advantage resulting therefrom is the possibility to remove stabilizers and other additive ingredients, which ultimately leads to a cleaner and shorter ingredient label.

In one embodiment, the microgel emulsion composition according to the present invention may be an acidified microgel emulsion composition. Acidified microgel emulsions are microgel emulsions with a pH below about 6.0, preferably between about 4.0 and 6.0, more preferably between about 4.5 and 5.5.

The acidified microgel emulsions may comprise in addition to the microgel emulsion ingredients, one or more lactic acid bacteria. Suitable lactic acid bacteria include *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.*

The acidified microgel emulsions may comprise an acidulant. Suitable acidulants include malic acid, citric acid, acetic acid, glucono-delta-lactone, phosphoric acid, lactic acid, tartaric acid, fumaric acid, sorbic acid, and benzoic acid.

The inventors surprisingly found that microgels produced by RuBisCO protein act as emulsifier in dairy analogue products. In particular, inventors found that said microgels have better emulsifying properties than native RuBisCO protein. Without intending to be bound to any theory, it is believed that microgels formed by the RuBisCO protein results in a Pickering emulsion, overcoming the protein charge neutralization during acidification, leading to a texture and mouthfeel that mirrors that of acidified dairy analogue products.

### Dairy analogue products

In accordance with another aspect, the present invention further relates to dairy analogues comprising the microgel and microgel emulsion compositions according to the present invention. In particular, the present invention further relates to acidified dairy analogues.

By dairy analogue and/or acidified dairy analogue, it is meant a product which is devoid of dairy components. The dairy analogue and/or acidified dairy analogue according to the present invention will mimic taste, texture, and appearance of a similar dairy-based product, offering the consumer a viable alternative to dairy products and still deliver on sensory expectations.

In a preferred embodiment, the dairy analogue and/or acidified dairy analogue is a yogurt analogue. The term "yogurt" is directed to an edible product (food product) which requires processing into a consistent, creamy texture. Such consistency is mainly provided in dairy analogues by water, proteins, and lipids, typically along with stabilizers and other additives, which together create a stable physical form. As a result, the yogurt performance is mainly determined by the emulsion quality and the texture conferred by the protein in solution.

The dairy analogue has similar rheological characteristics to its dairy counterparts. In particular, the dairy analogue preferably has a storage modulus at a temperature of 20°C within the linear viscoelastic region of 100 - 20 000 Pa, more preferably between 100 and 10 000 Pa, and a flow transition index greater than 4, more preferably greater than 5.

The dairy analogue may comprise further ingredients. For instance, the dairy analogue may further include a sweetener. In acidified dairy analogues, the sweetener may be added before or after acidification. Sweeteners suitable for use in the dairy analogues include any fermentable sweetener such as sugar (i.e., sucrose), honey, syrups (e.g., high fructose corn syrup, maple syrup, brown rice syrup, barley malt syrup), or any other fermentable sweetener source. Additionally, high-intensity sweeteners such as sucralose, stevia, monk fruit extract, aspartame, saccharin, and acesulfame potassium (Ace-K) may also be used. Furthermore, low-caloric sweeteners such as erythritol, allulose, xylitol, and tagatose may be used. The amount of sweetener in the dairy analogue may be from about 0.001 wt% to about 10 wt% by weight of dairy analogue, preferably from about 0.001 wt% to about 9 wt%, more preferably from about 0.001 wt% to about 8 wt%, even more preferably from about 0.001 wt% to about 5 wt%.

The dairy analogue may further include a non-dairy milk, a fiber, flavorings, and/or salt. The dairy analogue may include a non-dairy milk up to 99 wt% by weight of dairy analogue, preferably up to 95 wt%, more preferably up to 90 wt%. The non-dairy milk can be from any plant source, such as, nuts (almond, cashew, coconut, and others), grains (oat, rice, barley, and others), legumes (peanut, soy, pea, and others), or any combination thereof. The non-dairy milk analogue can contribute to flavor and/or nutritional content of the dairy analogue product.

The dairy analogues may also comprise texturizing ingredients such as fibers. Suitable texturizing ingredients may include psyllium husk, starches, oat fiber, wheat fiber, citrus fiber, maltodextrins with low dextrose equivalent, and partially or completely soluble fibers. Texturizing ingredients and/or fibers may be used in amounts between 0 and 5 wt%, wherein % is wt% are related to the dairy analogues.

Some plant proteins used in the manufacturing of dairy analogues may have unpleasant flavor profiles and intrinsic off-flavors, which hinders the acceptability of the products. Further, apart from correcting the off-flavors, desired aroma and taste needs to be introduced depending on the final product to be obtained. Flavoring agents suitable for use in the dairy analogues according to the present invention may be produced using precursors like reducing sugars (glucose, xylose, fructose, and ribose), amino acids (cysteine, cystine, lysine, methionine, proline, serine, threonine), vitamins (such as thiamine), nucleotides and iron complexes (e.g., ferrous chlorophyllin or heme-containing proteins). Further, flavoring agents can also be selected from the group consisting of a vegetable extract and/or vegetable powder, herbs and/or spices, fruit extracts, antioxidants (e.g. epigallocatechin gallate), carotenoids (e.g. lutein, β-carotene, zeaxanthin, trans-β-apo-8'-carotenal, lycopene, or canthaxanthin), lactones, and/or combinations thereof. Together with aromas and precursors, salt also plays an important role in taste perception. However, the role of salt is not only as a taste enhancer, but it also contributes to the extension of the shelf life of the product. Therefore, the dairy analogue according to the present invention may contain salts such as sodium chloride or potassium chloride. Flavoring ingredients generally are used in amounts from about 0.01 to about 10 wt%, preferably from about 0.5 to about 10 wt%, preferably from about 0.5 to about 7 wt%, preferably from about 0.5 to about 5 wt%, wherein % is wt% as related to the dairy analogues.

The color of the dairy analogue may be adjusted, for instance to a white or a cream color, by adding a suitable food coloring agent. The choice of the type of coloring agents and the amount present in the composition may vary depending upon the desired color of the final dairy analogue. Coloring agents suitable for use in compositions according to the present invention can be selected from the groups consisting of artificial dyes (e.g. FD&C Yellow #5, yellow #6, azo dye, triphenylmethane, xanthene, quinine, indigoid, titanium dioxide, red #3, red #40, blue #1,), cumin, saffron, carotenoids (e.g. carotene, canthaxanthin and lycopene), carotenoid-rich extracts (e.g. paprika oleoresins), caramel colors, malt, annatto, turmeric, beet pigment, iron oxide, anthocyanin, reducing sugars, amino acid sources, erythrosine, red yeast *(Monascus purpureus)* products made by fermenting rice and/or combinations thereof. The composition according to the present invention may further comprise an acidity regulator to maintain the pH in the optimal range for the colorant. Coloring ingredients may be used in amounts between 0 and 3 wt%, wherein % is wt% as related to the dairy analogues, whereby higher amounts are used when substances are used with relatively low coloring power.
The acidity regulator may be an acidulant. Examples of acidulants that may be added to the composition include malic acid, citric acid, acetic acid, glucono-delta-lactone, phosphoric acid, lactic acid, tartaric acid, fumaric acid, sorbic acid, and benzoic acid. Acidulants may be used in amounts between 0.1 and 2 wt%, wherein % is wt% are related to the dairy analogues. Acidification may also be achieved by including one or more lactic acid bacteria. Suitable lactic acid bacteria include *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.* Lactic acid bacteria may be used in amounts between 0 and 2 wt%, wherein % in wt% are related to the dairy analogues. The dairy analogue according to the present invention may include vitamins, such as vitamin A, vitamin B-complex (e.g. B-1, B- 2, B-6 and B-12), vitamin C, vitamin D, vitamin E and vitamin K, niacin, acid vitamins such as pantothenic acid, folic acid, biotin, minerals such as calcium, iron, zinc, magnesium, iodine, copper, phosphorus, manganese, potassium, chromium, molybdenum, selenium, nickel, tin, silicon, vanadium, iron salts such as ferric sodium EDTA, reduced iron, ferrous lactate, ferric citrate, ferric pyrophosphate, ferrous sulphate monohydrate or ferric ammonium citrate brown, and/or combinations thereof. Vitamins, minerals and iron salts may be used in amounts less than 5 wt%, preferably less than 3 wt%, even more preferably less than 2 wt%, wherein % is wt% are related to the dairy analogues. In particular, vitamins may be used in amounts between 0 and 0.5 wt%, wherein % is wt% are related to the dairy analogues. In particular, salts and minerals may be used in amounts between 0 and 2 wt%, wherein % in wt% are related to the dairy analogues.

The dairy analogues according to the present invention may include emulsifying agents, such as lecithin, mono- and diglycerides, polysorbate 80, acacia gum, carrageenan, xanthan gum, gellan gum, sodium stearoyl lactylate, sorbitan monostearate, and/or combinations thereof. Emulsifying agents may be used in amounts between 0 and 0.5 wt%, wherein % in wt% are related to the dairy analogues.

The dairy analogues according to the present invention may include stabilizing agents, such as gelatin, pectin, carrageenan, guar gum, xanthan gum, carboxymethylcellulose, locust bean gum, acacia gum, sodium alginate, modified starches, and/or combinations thereof. Stabilizing agents may be used in amounts between 0 and 3 wt%, wherein % in wt% are related to the dairy analogues. Preferably the dairy analogue according to the present invention does not include any stabilizing agent.

The dairy analogue according to the present invention may have the following exemplary formulation comprising, by weight:
a) between 1 to 15% RuBisCO protein,
b) between 0 to 10% other proteins,
c) between 1 to 15% total protein content,
d) between 0.001 to 10% sweetener,
e) between 0.1 to 60% lipids
f) between 0.1 to 2% acidulant,
g) between 0 to 2 % salts and minerals,
h) between 0 to 3% flavoring agents,
i) between 0 to 3% coloring agents,
j) between 0 to 5% fiber,
k) between 0 to 0.5 % vitamins,
l) between 0 to 2% lactic acid bacterial culture,
m) between 0 to 3% stabilizing agents,
n) between 0 to 0.5% emulsifying agents,
o) between 50 to 98% water or plant-based milk.

The dairy analogues according to the present invention comprise lipids in concentrations ranging from about 0.1 wt% to about 60 wt% relative to the dairy analogues, preferably from about 1.0 wt% to about 50 wt%, more preferably from about 2.0 wt% to about 30 wt%, even more preferably less than about 20 wt%. The lipid content may vary depending on the type of dairy analogue product. High-fat spread dairy analogues - e.g., vegan butter substitutes, coconut oil-based spreads, margarine products, cashew or almond-based butters, shea butters - comprise from about 40 wt% to about 60 wt% relative to the dairy analogue, more preferably from about 50 wt% to about 60 wt%. Heavy cream dairy analogues comprise from about 10 wt% to about 45 wt% relative to the dairy analogue, more preferably from about 20 wt% to about 35 wt%. Cream cheese dairy analogues comprise from about 0.1 wt% to about 50 wt% relative to the dairy analogue, more preferably from about 15 wt% to about 25 wt%. Cheese analogues comprise from about 10 wt% to about 40 wt% relative to the dairy analogue, more preferably from about 20 wt% to about 35 wt%. Sour cream dairy analogues comprise from about 5 wt% to about 40 wt% relative to the dairy analogue, more preferably from about 10 wt% to about 25 wt%. Light cream dairy analogues comprise from about 4 wt% to about 30 wt% relative to the dairy analogue, more preferably from about 10 wt% to about 30 wt%. Cottage cheese dairy analogues comprise from about 0.1 wt% to about 25 wt% relative to the dairy analogue, more preferably from about 0.2 wt% to about 5 wt%. Whole milk dairy analogues comprise from about 0 wt% to about 5 wt% relative to the dairy analogue, more preferably from about 0.5 wt% to about 4 wt%. Yogurt dairy analogues comprise from about 0 wt% to about 10 wt% relative to the dairy analogue, more preferably from about 0.1 wt% to about 4 wt%.

### Method

The method for making the microgel composition according to present invention comprises the following steps:
(a) dispersing a suitable amount of RuBisCO in water or in a plant-based milk;
(b) heating to a temperature of at about 65°C or more;
(c) cooling to a temperature of about of about 35°C or less;
(d) high shear mixing or high-pressure homogenizing the composition to obtain a microgel.

The process may be carried out in a continuous manner, that means, wherein the formation of the microgel occurs within a continuous mixing process wherein steps (a), (b) and (d) are carried out concurrently. Preferably, steps (a), (b) and (c) are carried out consecutively to form a RuBisCO gel and thereafter performing step (d) to obtain a RuBisCO microgel.

Preferably, step (b) is carried out at a temperature between about 65°C and about 200°C, more preferably between about 65°C and about 180°C, even more preferably between about 75°C and about 120°C. The heating process can be static, continuous, or under agitation.

Preferably, step (c) is carried out at a temperature between about 0°C and about 35°C, more preferably between about 0°C and about 20°C, even more preferably between about 2°C and about 8°C.

In a preferred embodiment, the gel disruption method (d) is shear mixing, preferably high shear mixing or high-pressure homogenizing. Preferably, the disrupting method is rotor stator mixing, for example using an Ultra-Turrax. Other high-shearing apparatus are well-known in the art and can be used according to normal practice in the present invention. The maximum operating speed for preparation of microgel can be between 1,500 to 20,000 rpm, for example between 1,500 to 6,000 rpm, for example about 4,000 rpm. The rotor speed depends on the rotor-stator geometry. Longer and higher speeds do not in general produce smaller particle sizes. Preferably, the coarse microgel suspension of particles has a monomodal particle size distribution.

In one embodiment, the microgel composition is optionally further processed through a drying step to obtain a dry powder or particulate that can be rehydrated before use. The drying allows for a longer shelf-life and easier application.

In one embodiment, step (a) comprises dispersing a suitable amount of RuBisCO and at least one protein other than RuBisCO, wherein the at least one protein is a plant protein, a microbial protein, or a recombinant protein. For example, RuBisCO can be combined with one of soy protein isolate, pea protein isolate, potato protein isolate, or chickpea protein concentrate.

In another embodiment, step (d) of the method further comprises dispersing a suitable amount of at least one protein other than RuBisCO, wherein the at least one protein is a plant protein, a microbial protein, or a recombinant protein.

The microgel compositions according to the invention may be used in the preparation of food analogues, in particular of dairy analogues.

The microgel composition according to the present invention may be further processed to obtain a microgel emulsion composition. The method for making the microgel emulsion composition according to present invention further comprises the following steps:
(e) adding a suitable amount of at least one lipid;
(f) emulsifying to obtain a microgel emulsion composition.

The lipid or lipids may also be included during step (a; dispersing a suitable amount of RuBisCO in water or in a plant-based milk), or step (d; high shear mixing or high-pressure homogenizing the composition to obtain a microgel) of the microgel preparation process.

In one embodiment, step (f) of the method further comprises dispersing at least one protein other than RuBisCO, wherein the at least one protein is selected from the group consisting of plant protein, microbial protein, and recombinant protein, and emulsified to obtain a microgel emulsion composition.

In an exemplary alternative embodiment, microgel emulsion compositions according to the present invention may be obtained directly, though a continuous process comprising the steps of
(a) dispersing a suitable amount of RuBisCO in water or in a plant-based milk;
(b) heating to a temperature of about 65°C or more;
(c) cooling to a temperature of about 35°C or less;
(d) adding a lipid;
(e) high shear mixing or high pressure homogenizing the composition to obtain a microgel emulsion.

In a continuous process, steps (a), (d) and (e) can be performed simultaneous with either or both of the heating and cooling step.

The lipid or lipids may also be included during step (a; dispersing a suitable amount of RuBisCO in water or in a plant-based milk), or step (e; high shear mixing or high-pressure homogenizing the composition to obtain a microgel emulsion).

Preferably, step (b) is carried out at a temperature of about 65°C to about 180°C, more preferably to a temperature of about 75°C to about 120°C. The heating process can be static, continuous, or under agitation. Preferably the heating is carried out while mixing.

Preferably, step (c) is carried out at a temperature of about 0°C to about 35°C, more preferably to a temperature of about 2°C to about 8°C.

In a one embodiment, at least one lipid is added in an amount between about 0.1 wt% to about 60 wt%, preferably between about 1 wt% and 50 wt%, more preferably from about 2.0 wt% to about 30 wt%, even more preferably less than about 20 wt% .

The microgel emulsion may be combined with other ingredients. The mixture can be further agitated and/or heated (from about 35°C to about 60°C) and/or homogenized to solubilize ingredients in the mixture.

In one embodiment, step (d) of the method further comprises dispersing at least one protein other than RuBisCO, wherein the at least one protein is selected from the group consisting of plant protein, microbial protein, and recombinant protein, and emulsified in step (e) to obtain a microgel emulsion composition.

The microgel emulsion compositions according to the invention may be used in the preparation of food analogues, in particular of dairy analogues.

The microgel compositions and microgel emulsion compositions according to the present invention may be acidified. Acidified microgel compositions and microgel emulsion compositions may be used in the preparation of dairy analogues, in particular of acidified dairy analogues.

In one embodiment, the microgel compositions and microgel emulsion compositions are subjected to an acidification process. Acidification may be accomplished for example by fermentation of said compositions, in a similar manner to dairy products. Lactic acid bacteria may be used in the fermentation process. Suitable lactic acid bacteria are one or more of *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.* Fermentation is generally carried out until a desired pH is achieved. Fermentation is carried out until a pH of about 6.0 or less is achieved, preferably between about 4.0 and about 6.0, more preferably between about 4.5 and 5.5.

In another embodiment, acidification of the compositions is accomplished by the addition of acidulant until a desired pH is achieved. An acidulant is added until a pH of about 6.0 or less is achieved, preferably between about 4.0 and about 6.0, more preferably between about 4.5 and 5.5. Any suitable acidulant may be used. Suitable acids include malic acid, citric acid, acetic acid, glucono-delta-lactone, phosphoric acid, lactic acid, tartaric acid, fumaric acid, sorbic acid, and benzoic acid.

An alternative method for making a microgel emulsion composition comprises the steps of:
(a) dispersing a suitable amount of RuBisCO and other proteins in water or in a plant-based milk;
(b) heating to a temperature of about 65°C preferably to a temperature of about 65°C to about 180°C, more preferably to a temperature of about 75°C to about 120°C, or more while mixing;
(c) cooling to a temperature of about 35°C or less, preferably to a temperature of about 0°C to about 35°C, more preferably to a temperature of about 2°C to about 8°C;
(d) adding a lipid;
(e) high shear mixing or high-pressure homogenizing the composition to obtain a microgel emulsion.

As in the earlier described processes, in case such process would be implemented in a continuous fashion, steps (a), (d) and (e) can be performed simultaneously, during either or both of steps (b) and/or (c).

In one embodiment, step (d) of the method further comprises dispersing at least one protein other than RuBisCO, wherein the at least one protein is selected from the group consisting of plant protein, microbial protein, and recombinant protein, and emulsified in step (e) to obtain a microgel emulsion composition.

### EXAMPLES

The following examples are included to demonstrate preferred embodiments of the invention. The examples furthermore illustrate the surprising effect of the preferred ingredient combination in comparison to other obvious combinations that do not exhibit the same effect as the preferred embodiment which has been surprisingly discovered by the inventors.

### Methods

### Particle Size Analysis

The particle size distribution of protein microgel, protein microgel emulsion, and protein emulsion was determined by light scattering using a Malvern Mastersizer 3000 fitted with Hydro-Cell. The analysis was conducted using a refractive index of 1.4694 for oil and 1.33 for water for the scatterer. The feeding beaker of the hydro-cell was filled with ultrapure water and the sample was added dropwise until the right scattering range indicated by the instrument was reached. The particle size distribution is presented as volume mean diameter D[4, 3] or as d₉₀, the maximum particle diameter below which 90% of the sample volume exists.

### Amplitude Sweep

The texture parameters of protein microgel, protein microgel emulsion, yogurt analogue sample and commercial comparison sample were determined by rheology using an Anton Paar MCR 302 rheometer. Other rheology apparatuses are well-known in the art and can be used according to normal practice in the present invention. Depending on the viscosity of the samples, PP25 or PP50 geometry were used (as this an absolute measurement, results are comparable with different geometry). With a small spoon and spatula, with as low impact as possible, a thin "slice" of sample was taken from the beaker and placed on the rheometer. The upper geometry was lowered to a gap width of 1 mm, the samples were trimmed around the geometry and an amplitude sweep at 20°C, γ = 0,01-100%, ω = 10 s⁻¹ was performed. From the results, the linear viscoelastic region, where G' and G" are constant, was identified. The value of G' in the linear viscoelastic region is a measure for the hardness and was therefore evaluated to compare the hardness of the different samples analyzed. Furthermore, the flow transition index, which is defined as τf / τy, where if is the flow point or cross-over point of G' and G" and τy is the yield point or the limit of the linear viscoelastic region or end of constant G' value, was identified. Low flow transition index values indicate brittleness, while higher flow transition index values indicate creaminess.

### Light Microscopy

Light microscopy analysis was performed with Olympus BX51. Samples were prepared through dilution 1:1 with demineralized water. 2-3 drops were added with a pipette on a microscope slide and topped with a cover slip without the incorporation of air bubbles. Magnification was set at 20x.

### Example 1: Microgel preparation

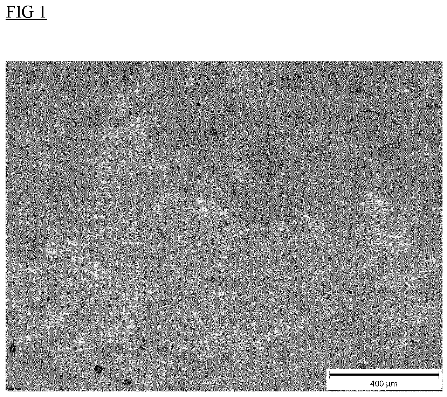

Microgels were prepared according to the following procedure: a 4 wt% RuBisCO protein solution is prepared in water and heated at 90°C for 60 min. The RuBisCO protein powder used for this experiment and all presented experiments was 84% in protein content. Instead of water, a plant-based milk (e.g., almond or oat milk) can be used. The heat-treated solution is cooled to less than 8°C for about 16 hours and sheared in a mixer or rotor-stator homogenizer to form microgels (FIG 1). The particle size distribution of the obtained microgels expressed as D[4,3] was about 25 to 40 µm, and d₉₀ was about 50 to 100 µm.

### Example 2: Microgel emulsion preparation

A microgel was prepared according to Example 1.

Attempts at producing a microgel using 4 wt% soy protein isolate or 4 wt% pea protein isolate following the method of Example 1 failed due to the lack of gel formation at such low protein concentration. Therefore, 4 % protein solutions of each soy and pea were prepared by dispersing the protein in water followed by heat treatment at 90°C for 60 minutes.

Emulsions were prepared by mixing 4 wt% protein solution or 4 wt% RuBisCO protein microgel with 3.5 wt% sunflower oil using a mixer or rotor-stator homogenizer. The resulting emulsion was stored at less than 8 °C for 16 hours.

The results show that the emulsion stabilized by RuBisCO microgel had the smallest average particle size (D[4, 3] of 23.5 µm) after homogenization **(Table 1)** and the best emulsion stability compared against established plant proteins such as soy protein isolate and pea protein isolate. RuBisCO protein in its native form did not form a stable emulsion similarly to soy and pea protein emulsions. After 5 days of storage in the fridge, the soy and pea emulsions showed an oil layer on top of the sample. It was surprisingly found that RuBisCO microgel emulsions achieved the best emulsion stability without the use of stabilizers.

**Table 1. Particle size of protein or microgel stabilized emulsions and stability after 5 days of refrigerated storage.**

| **Protein used for emulsion** | **Microgel formation at 4 wt% protein** | **Particle size (D[4,3]) (µm)** | **Phase separation after 5 days** |
|---|---|---|---|
| **RuBisCO protein** | N/A | 62.1 | Yes |
| **RuBisCO microgel** | Yes | 23.5 | No |
| **Soy protein isolate** | No gel formation | 57.9 | Yes |
| **Pea protein isolate** | No gel formation | 71.1 | Yes |

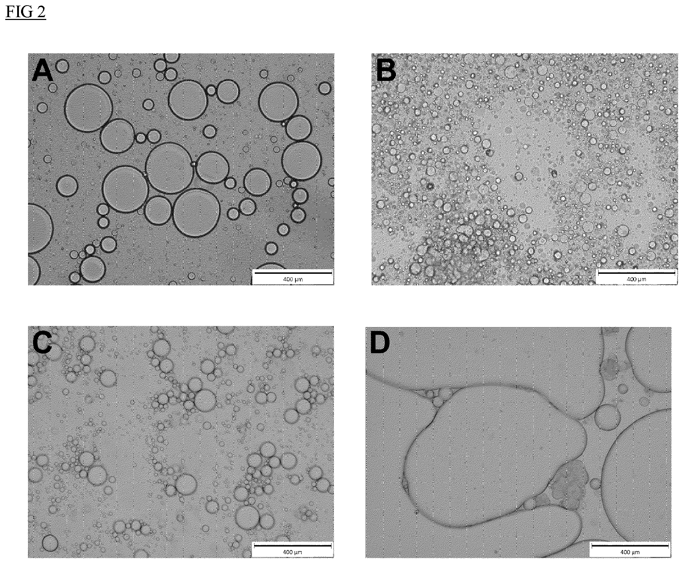

In addition, the microscopic images show the superiority of the RuBisCO microgel in stabilizing an oil-in-water emulsion compared to RuBisCO protein and other plant proteins (**FIG 2**).

Amplitude sweep test results demonstrated that RuBisCO microgel emulsion showed storage modulus (G') values of 300 Pa and flow transition index of 4.5 demonstrating thickness and creaminess whereas no such values could be obtained for other assessed samples demonstrating lack of texture in those emulsions at 4 wt% protein.

### Example 3: Acidified microgel emulsion preparation

A microgel emulsion comprising RuBisCO was prepared according to the method in Example 2. The RuBisCO microgel emulsion was acidified with glucono-delta-lactone for 24 hours while being stored at less than 8°C to produce acidified microgel emulsion **(Table 2**).

**Table 2: Example composition of acidified RuBisCO microgel emulsion.**

| **Ingredient** | **Amount (wt%)** |
|---|---|
| Water | 91.5 |
| RuBisCO protein powder | 4.6 |
| Sunflower oil | 3.5 |
| Glucono-delta-lactone | As needed |

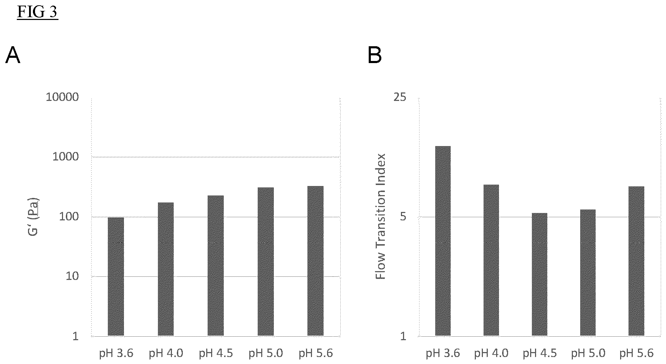

A range of pH (3.6, 4, 4.5, 5, and 5.6) was assessed to evaluate the texture of microgel emulsion in acidified food conditions. With decreasing pH, the storage modulus G', representing the gel hardness, decreased in the RuBisCO yogurt analogues (**FIG 3A**). The flow transition index, representing creaminess, was minimal around the isoelectric point (~ pH 4.5) and increased with lower and higher pH values (**FIG 3B**). On the other hand, all samples were above desirable values of storage modulus G' (greater than 100 Pa) and flow transition index (greater than 4), which were identified from comparison measurements of commercial dairy and plant-based samples.

### Example 4: High protein acidified microgel emulsion preparation

Different concentrations of RuBisCO protein microgels were prepared (2 wt%, 3 wt%, 4 wt%, 6 wt%, 8 wt% final protein content) according to the method in Example 1 to assess the texture of acidified RuBisCO microgel emulsion at higher protein concentration. The sunflower oil used for the emulsion was added at 3.5 wt% and the pH was adjusted to 4.6 using glucono-delta-lactone following the procedure outlined in Example 3.

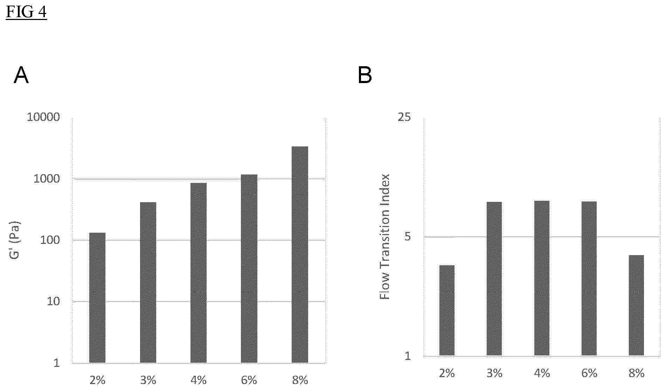

The results showed that with increasing RuBisCO concentration in the microgel, the storage modulus G' increased (130 - 3300 Pa) which demonstrated an increase in viscosity of the emulsion (**FIG 4A**). The flow transition index was greater than 4 at 3, 4, and 6 wt% of RuBisCO protein (**FIG 4B**). At 8 wt% RuBisCO protein, the G' of the acidified microgel emulsion increases, showing a more solid-like behavior suitable for thicker and stiffer cream products such as Greek-type or Skyr-type dairy yogurt.

### Example 5: Rheological properties of yogurt analogues

Microgel comprising RuBisCO was prepared according to the method in Example 1. The microgel was used to prepare a microgel emulsion with sunflower oil **(Table 3**).

For yogurt analogues produced using soy protein isolate, pea protein isolate, potato protein isolate, or chickpea protein concentrate, 4 wt% protein solutions were heat treated at 90°C for 60 minutes followed by emulsification with 3.5 wt% sunflower oil. Prepared emulsions (protein solution or RuBisCO microgel) were acidified with glucono-delta-lactone to pH 4.6 for 24 hours while being stored at less than 8°C to produce yogurt analogues. All protein solutions were prepared based on their final protein content.

A commercial non-dairy soy yogurt, containing 4g of protein per 100g of product, pectins and stabilizers, was also assessed for comparison.

**Table 3: Composition of yogurt analogue.**

| **Ingredient** | **Amount (wt%)** |
|---|---|
| Water | 91.4 |
| Plant protein ingredient | 4.6 |
| Sunflower oil | 3.5 |
| Glucono-delta-lactone | 0.5 |

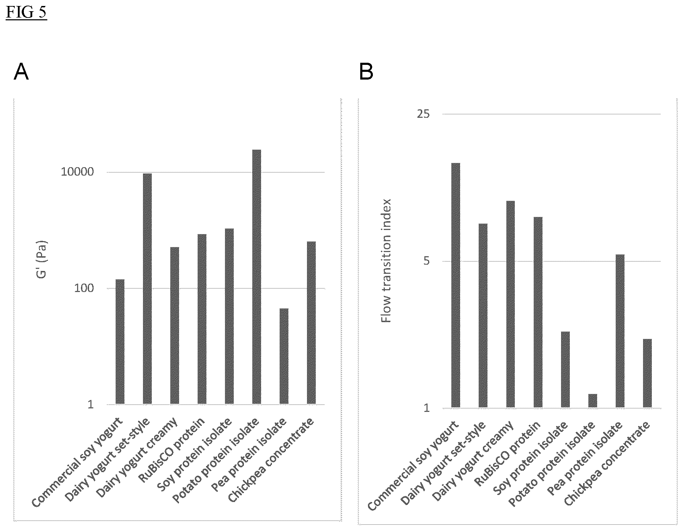

Amplitude sweeps of commercial non-dairy and dairy yogurts showed a storage modulus range of 100 - 10 000 Pa (**FIG 5A**). The RuBisCO microgel yogurt analogue was well in between that desirable range (850 Pa). While yogurt analogues based on soy protein isolate and chickpea concentrate were also in this storage modulus range, the sample based on potato protein was well above the maximum desirable storage modulus (10 000 Pa) while the pea protein isolate sample was well below the minimum desirable storage modulus (100 Pa). The sample based on potato protein formed a harder gel, leading to a texture that was too firm for a yogurt, while the sample based on pea protein isolate formed a much weaker gel with a thinner, almost liquid, texture.

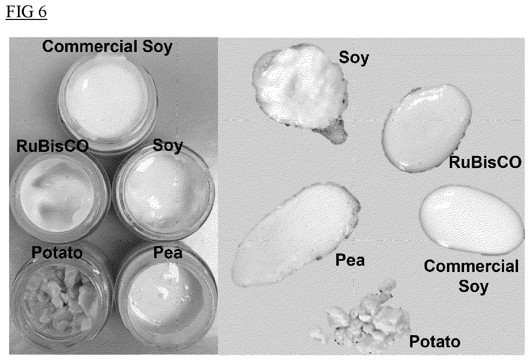

The flow transition index of the RuBisCO microgel yogurt analogue was in the range of dairy yogurts (8.0 vs. 7.5-9.5), while soy and chickpea samples were well below (< 2.5) the desirable range (> 4.0, **FIG 5B**). **Table 4** and **FIG 6** furthermore show a visual impression of the RuBisCO microgel yogurt analogue compared to other non-dairy yogurt samples produced similarly.

### Example 6: Yogurt analogues comprising RuBisCO microgel and further plant proteins

A protein microgel was prepared by adding soy, pea or potato protein isolate in RuBisCO protein solution before heat treatment. The yogurt analogue was prepared according to Example 4. Stable microgels were obtained.

Emulsification with oil and acidification resulted in yogurt analogues with desirable texture (**FIG 6**). RuBisCO microgel emulsion is stable in the presence of other proteins and can be used to improve the texture of other acidified dairy analogues.

**Table 5. Composition of yogurt analogue containing RuBisCO and other plant proteins.**

| **Ingredient** | **Amount (wt%)** |
|---|---|
| **Water** | 84.9 |
| **RuBisCO protein powder** | 4.4 |
| **Other plant protein ingredient** | 4.1 |
| **Sunflower oil** | 3.4 |
| **Glucono-delta-lactone** | 3.2 |

### Example 7: Fermented yogurt analogue

RuBisCO microgel emulsion was produced by mixing 4 wt% RuBisCO protein solution with sucrose at 5 wt% and sunflower oil at 3.5 wt% while heating at 90°C for 30 minutes. The resulting emulsion was cooled, homogenized, and fermented at 43° C with a dairy-isolated lactic acid bacteria culture containing *Streptococcus thermophilus* and *Lactobacillus bulgaricus* to pH 4.6 to form a fermented yogurt analogue. The non-dairy fermented yogurt was stored at 4°C for 24 hours before visual observation. The visual observation revealed that the obtained texture was smooth and creamy, similar to a conventional dairy yogurt.

### Example 8: High protein or Greek-type yogurt analogue

RuBisCO microgel emulsion was produced by mixing RuBisCO protein at 10 wt% with sucrose at 5 wt% and sunflower oil at 3.5 wt% while heating at 90°C for 30 minutes. The resulting emulsion was cooled, homogenized, and acidified for 24 hours with glucono-delta-lactone to pH 4.6. The high protein yogurt analogue was stored at 4°C for one day before visual observation. The visual observation revealed that the obtained texture was thick and stiff similar to a Greek-type or Skyr-type dairy yogurt.

### Example 9: Plant-based almond drink as base in RuBisCO yogurt analogue

An almond drink base was made by blending 92.8 wt% water with 2.3 wt% almond paste. Afterwards, 4.6 wt% RuBisCO protein powder was added, and the mixture was heated at 90°C for 60 minutes. The resulting gel was cooled and homogenized with 3.1 wt% oil. Glucono-delta-lactone was added for acidification to the obtained microgel emulsion, and the sample was stored under cool conditions for > 24 h before analysis.

The rheological analysis showed that the use of an almond drink base made the RuBisCO yogurt analogue slightly firmer (1160 Pa with almond drink vs. 850 Pa with pure water) and also creamier, shown by an increased flow transition index (9.6 vs. 8.1).

## Claims

1. A microgel composition comprising:
i. about 1.0 wt% to about 15 wt% RuBisCO protein, preferably about 1.0 wt% to about 13 wt%, more preferably about 1.0 wt% to about 10 wt%, even more preferably 1.0 wt% to about 8 wt%, even more preferably about 1.0 wt% to about 5.0 wt%;
ii. water or a plant-based milk.

2. The microgel composition according to any one of the preceding claims, wherein the microgel has a particle size distribution of less than D[4,3] 90 µm, preferably between D[4,3] of 10 µm and 50 µm, and d₉₀ less than 100 µm measured dispersed in water and measured by DLS using a Malvern Mastersizer 3000.

3. The microgel composition according to any one of the preceding claims, wherein the microgel comprises at least one protein other than RuBisCO, wherein the at least one protein is selected from the group consisting of plant protein, microbial protein, and recombinant protein.

4. The microgel composition according to any one of the preceding claims, wherein the microgel composition comprises a plant-based milk, wherein the plant-based milk is a liquid product derived from the processing of one or more plant materials preferably selected from soy, pea, almond, oat, rice, and coconut.

5. A microgel emulsion composition comprising:
i. about 40 wt% to about 99.9 wt% of the microgel composition according to any one of the preceding claims;
ii. about 0.1 wt% to about 60 wt% of at least one lipid.

6. The microgel emulsion composition of claim 5, further comprising at least one acid, preferably wherein the at least one acid is selected from the group consisting of malic acid, citric acid, acetic acid, glucono-delta-lactone, phosphoric acid, lactic acid, tartaric acid, fumaric acid, sorbic acid, and benzoic acid.

7. The microgel emulsion composition of claim 5, further comprising at least one of a lactic acid bacterial culture, wherein the lactic acid bacterial culture is selected from the group consisting of *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.*

8. A dairy analogue product comprising the microgel composition or the microgel emulsion composition according to any one of the preceding claims.

9. The dairy analogue product according to claim 8, wherein the dairy analogue is a yogurt-type product or a sour cream-type product, preferably wherein the yogurt-type product is set yogurt, stirred yogurt, drinking yogurt, Kefir yogurt, probiotic yogurt, lactose-free yogurt, high-protein yogurt, low-fat yogurt, and non-fat yogurt.

10. The dairy analogue product according to any one of the preceding claims, having a storage modulus at a temperature of 20°C within the range of about 100 Pa to about 20 000 Pa, preferably within the range of about 100 Pa to about 10 000 Pa.

11. The dairy analogue product according to any one of the preceding claims, having a flow transition index greater than 4 determined by amplitude sweep using an Anton Paar MCR 302 rheometer.

12. The dairy analogue product according to any one of the preceding claims, wherein the dairy analogue product has a pH between about 4.0 and about 6.0, preferably between about 4.5 and about 5.5.

13. The dairy analogue product according to any one of the preceding claims, further comprising at least one of a carbohydrate, a sweetener, an emulsifier, or a salt.

14. A method for making a microgel composition comprising the steps of:
(a) dispersing a suitable amount of RuBisCO protein in water or in a plant-based milk, preferably from about 1.0 wt% to about 15 wt% RuBisCO protein, preferably from about 1.0 wt% to about 13 wt%, more preferably from about 1.0 wt% to about 10 wt%, even more preferably 1.0 wt% to about 8 wt%, even more preferably from about 1.0 wt% to about 5.0 wt%;
(b) heating to a temperature of about 65°C or more, preferably to a temperature of about 65°C to about 180°C, more preferably to a temperature of about 75°C to about 120°C;
(c) cooling to a temperature of about 35°C or less, preferably to a temperature of about 0°C to about 35°C, more preferably to a temperature of about 2°C to about 8°C;
(d) high shear mixing or high-pressure homogenizing.

15. The method according to claim 14, wherein step (a) and/or step (d) comprise further dispersing at least one protein other than RuBisCO, wherein the at least one protein is selected from the group consisting of plant protein, microbial protein, and recombinant protein.

16. The method according to any one of the preceding claims, wherein the microgel is further processed through a drying step to obtain a dry powder or particulate.

17. The method according to any one of the preceding claims, further comprising the steps of:
(e) adding a suitable amount of at least one lipid, about 0.1 wt% to about 60 wt% of at least one lipid, preferably from about 1.0 wt% to about 50 wt%, more preferably from about 2.0 wt% to about 30 wt%, even more preferably less than about 20 wt%;
(f) emulsifying to obtain a microgel emulsion composition.

18. The method according to any one of the claims 14-17, wherein steps (a), (b) and (d) are carried out concurrently, preferably wherein steps (a), (b), (d) and (e) are carried out concurrently.

19. The method according to any one of claims 17-18, wherein the microgel emulsion composition is acidified with at least one acid preferably selected from the group consisting of malic acid, citric acid, acetic acid, glucono-delta-lactone, phosphoric acid, lactic acid, tartaric acid, fumaric acid, sorbic acid, and benzoic acid.

20. The method according to any one of claims 18-19, wherein the microgel emulsion composition is fermented with a lactic acid bacterial culture, preferably wherein the lactic acid bacterial culture is selected from the group consisting of *Streptococcus thermophilus, Lactobacillus delbrueckii bulgaricus, Lactobacillus acidophilus, Lactobacillus rhamnosus, Lactobacillus plantarum, Lactobacillus helveticus, Pediococcus acidilactici, Bifidobacterium animalis lactis,* and *Weissella cibaria.*
